# EUROPÄISCHE PATENTSCHRIFT

(11) **EP 0 340 542 B1**
(45) Veröffentlichungstag und Bekanntmachung des Hinweises auf die Patenterteilung: **18.08.1993**
(21) Anmeldenummer: 89107085.6
(22) Anmeldetag: 20.04.1989
(51) Int. Cl.: B01D 39/00, B01J 20/28

(54) **Adsorptionsfilter mit hoher Luftdurchlässigkeit**
Adsorptionfilter with high air permeability
Filtre adsorbant à grande perméabilité pour l'air

(30) Priorität: 22.04.1988 DE 3813563
(43) Veröffentlichungstag der Anmeldung: 08.11.1989
(73) Patentinhaber: von Blücher, Hasso, D-40549 Düsseldorf (DE); de Ruiter, Ernest, Dr., D-51381 Leverkusen (DE)
(72) Erfinder: Von Blücher, Haso, D-4000 Düsseldorf 1 (DE); de Ruiter, Ernest, Dr., D-5090 Leverkusen 3 (DE)
(74) Vertreter: Eggert, Hans-Gunther, Dr.

(56) Entgegenhaltungen:
- DE-A- 3 443 900
- DE-U- 8 614 516
- GB-A- 896 345
- US-A- 1 786 361
- US-A- 4 314 905
- US-A- 4 619 948
- CHEMICAL ABSTRACTS, Band 99, Nr. 14, Oktober 1983, Seite 114, Zusammenfassung Nr. 107367w, Columbus, Ohio, US;

## Beschreibung

Um unerwünschte Stoffe aus Gasen oder Flüssigkeiten zu entfernen, bedient man sich gern eines Adsorptionsfilters. Eine viel angewandte Filterform sind Schüttfilter, bei denen das zu reinigende Medium ein Fixbett aus Adsorberteilchen durchströmt.
Um eine ausreichende Funktionsdauer des Filters zu gewährleisten, muß eine genügende Menge bzw. Masse des Adsorbermaterials vorhanden sein. Gleichzeitig ist aber die Adsorptionskinetik der angebotenen "äußeren" Oberfläche der Teilchen proportional, so daß in dieser Beziehung kleine Teilchen günstiger sind. Hinzu kommt noch, daß größere Adsorberteilchen oft nur in den äußeren Bereichen voll genutzt werden. Diese sind meist bereits gesättigt - was eine Unterbrechung der Adsorption und zwischenzeitliche Desorption verlangt - wenn im Inneren die Kohle nur schwach beladen ist. Die Verwendung möglichst kleiner Teilchen in einem Schüttfilter führt jedoch notgedrungen zu einem hohen Druckverlust. In der Praxis wird die Teilchengröße nach unten durch den damit verbundenen Druckverlust begrenzt. Ein weiterer Nachteil von Schüttfiltern ist, daß es durch Aneinanderreiben der Adsorberteilchen zu Abriebserscheinungen kommt, und daß die pulverförmige Kohle den Strömungswiderstrand noch zusätzlich erhöht.

Es wird allgemein die Auffassung vertreten, eine gute Filterleistung bedinge notgedrungen einen hohen Durchgangswiderstand, weil nur dann ein guter Kontakt zwischen dem zu reinigenden Gas und den Adsorberkörnern bestünde. Um außerdem Durchbrüche über Hohlräume auszuschließen, die durch sich absetzende Teilchen entstehen, muß die Packung fest komprimiert sein. Damit ist ein hoher Strömungswiderstand der Schüttfilter vorprogrammiert.

Ein Schüttfilter mit hoher Durchlässigkeit ist in GB-A-896 345 beschrieben

Es ist deshalb Aufgabe der vorliegenden Erfindung, die Nachteile der klassischen Schüttfilter aus Adsorberteilchen zu vermeiden und einen Adsorptionsfilter mit geringem Strömungswiderstand bei hoher Adsorptionsleistung zu schaffen.

Die erfindungsgemäße Lösung ist ein Adsorptionsfilter aus einem hoch luftdurchlässigen, im wesentlichen formstabilen dreidimensionalen aus Drähten, Monofilamenten oder Stegen aufgebauten Trägergerüst, an dem eine Schicht von körnigen, insbesondere kugelförmigen, Adsorberteilchen eines Durchmessers von 0,1 bis 1 mm fixiert ist wobei der Abstand der Drähte, Monofilamente oder Stege voneinander wenigstens doppelt so groß ist wie der Durchmesser der Adsorberteilchen. Vorzugsweise beträgt er etwa das drei- bis zehnfache. Demgemäß haben die Öffnungen oder Poren des Trägergerüsts einen Durchmesser von 1 bis 5 mm, vorzugsweise 1,5 bis 2,5 mm. Der Durchmesser der Drähte, aus denen das Trägergerüst aufgebaut sein kann, beträgt vorzugsweise 0,1 bis 0,8 mm. Wenn das hoch luftdurchlässige im wesentlichen formstabile dreidimensionale Trägergerüst aus Monofilamenten oder Fäden aus Kunststoffen, Glas oder Gesteinsschmelzen aufgebaut ist, beträgt der Durchmesser vorzugsweise 0,2 bis 1 mm.

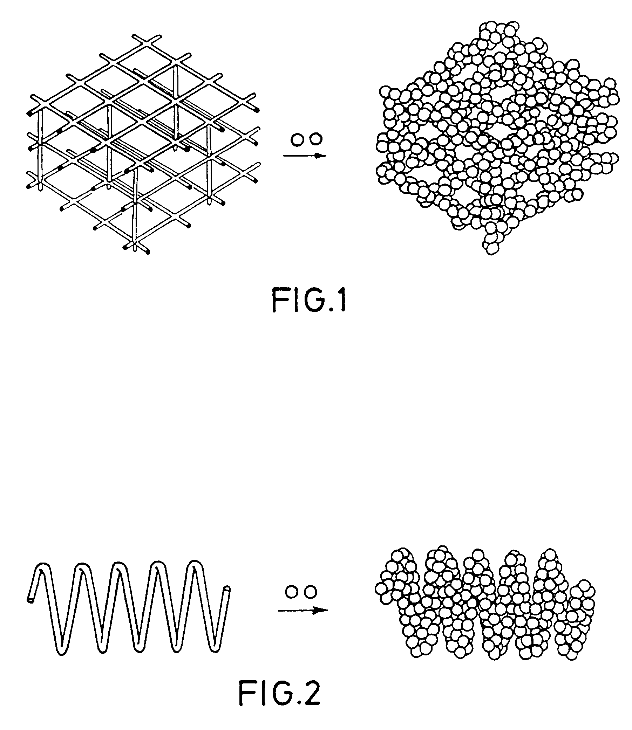

Das Trägergerüst kann aus übereinander angeordneten Drahtgeflechten oder Drahtgittern einer Maschenweite von 1 bis 5 mm, vorzugsweise 1,5 bis 2 mm aufgebaut sein, zwischen denen sich Abstandshalter etwa gleicher Länge wie die angegebenen Durchmesser befinden. Ohne und mit daran fixierten Adsorberteilchen ist ein solches Trägergerüst in etwa fünffacher Vergrößerung in der Figur 1 dargestellt.

Ein anderes, für die Zwecke der Erfindung sehr brauchbares Trägergerüst besteht aus Kunststoff- oder Drahtwendeln von der gleichen bis etwa zehnfachen Länge ihres Durchmessers. Zu solchen Strukturen lassen sich beispielsweise Monofilamente aus thermoplastischen Kunststoffen mit einem Durchmesser von 0,2 bis 1 mm mit üblichen Mitteln, z.B. Umwickeln eines Dornes mit der gewünschten Steigung leicht herstellen. Die Elastizität reicht aus, um eine solche Wendel im verfestigten Zustand nach Abtrennen auf die gewünschte Länge durch Zusammendrücken von dem Dorn abzustreifen. Derartige Trägerstrukturen in Form einer Wendel haben in der Regel einen Durchmesser von 0,3 bis 10 mm und die gleiche bis etwa zehnfache Länge. Eine derartige Trägerstruktur ohne und mit den daran fixierten Adsorberteilchen ist in Figur 2 in etwa dreifacher Vergrößerung dargestellt.

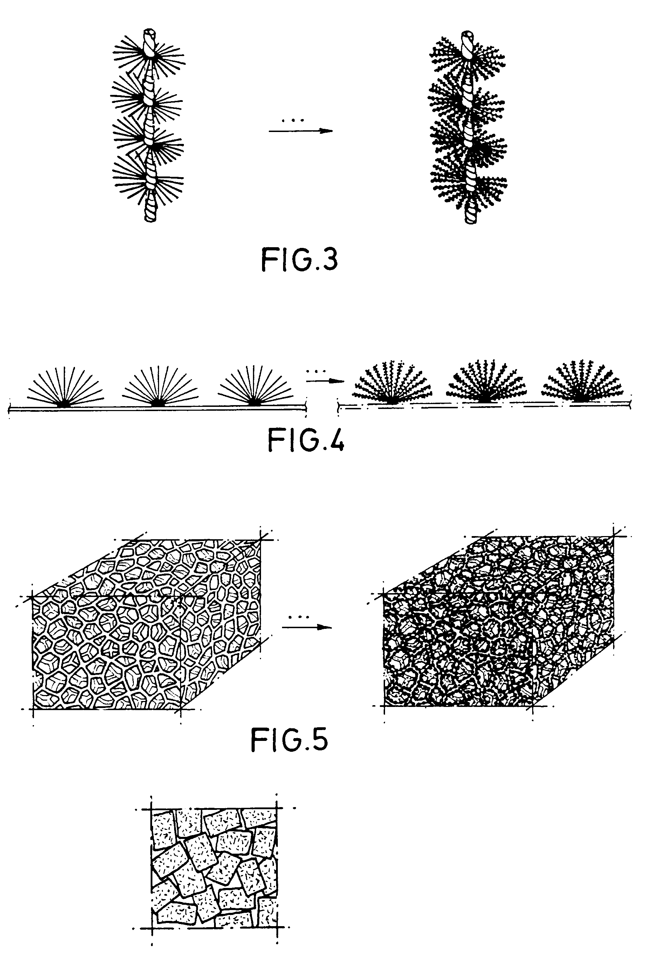

Auch Drähte oder Monofilamente von 2 bis 10 mm Länge, die von zusammengedrehten Metalldrähten oder Kunststoffmonofilamenten gehalten werden und dann senkrecht zu dieser Achse wendentreppenartig abstehen, sind sehr brauchbare Trägerstrukturen für die Zwecke der Erfindung. Derartige Gebilde werden in den verschiedensten Größen als Reagenzglas- oder Flaschenputzer hergestellt. Für die Zwecke der Erfindung werden sie dann auf die Länge von einigen Zentimetern, z.B. 1 bis 10 cm geschnitten. Filterelemente aus dieser Trägerstruktur sind in Figur 3 gezeigt.

Im Handel sind ferner bäumchenartige Faserpinsel, deren Fasern von 1 bis 10 mm Länge strahlenförmig von einem Mittelpunkt ausgehen und meist an einem Garn oder Monofilament befestigt sind, von dem sie für die Zwecke der Erfindung nach Beladung mit den Adsorberteilchen z.B. mit einer Spaltledermaschine abgetrennt werden können. Derartige Trägerstrukturen sind in der Figur 4 dargestellt.

Eine bevorzugte Ausführungsform des Trägergerüsts ist ein großporiger retikulierter PUR-Schaum mit einem Litergewicht von 20 bis 60 g und Poren von 1,5 bis 3 mm Durchmesser. Solche Schäume werden in bekannter Weise dadurch hergestellt, daß zunächst ein großer in einer geschlossenen Kammer befindlicher offenporiger Schaumblock evakuiert wird. Dann läßt man ein explosives Gasgemisch einströmen und zündet dieses. Durch die Explosion werden die Zellwände zerstört und schmelzen zu Stegen zusammen. Deshalb haben retikulierte Schäume keine Wandungen, sondern bestehen nur aus einem Gitterwerk von Stegen, die Käfige eines Durchmessers von etwa 1 bis 5 mm bilden. Diese "Schäume" sind elastisch, lassen sich auch bei einigen Zentimetern Dicke noch von Hand leicht zusammendrücken und nehmen dann wieder ihre ursprüngliche Form an. Wenn sie vollständig mit Adsorberkügelchen oder -körnchen bedeckt sind, wie das die Figur 5 zeigt, sind sie verhältnismäßig steif und mit gleichem Kraftaufwand nicht mehr kompressibel.

Die retikulierten Schäume können bereits die für die Fertigung oder den Einsatz als Filterschicht optimale Dicke besitzen. Wenn diese nur einige Zentimeter beträgt, läßt es die offenporige Struktur zu, daß sie auch im Innern mit Adsorberkügelchen oder -körnern ummantelt werden können und dann direkt die gewünschte Form der Filterschicht haben oder das sie aus einer größeren Platte herausgestanzt werden können. Es ist auch möglich, diese Platten nachträglich zu Elementarfiltern in Form von Streifen oder Schnitzeln etwa von der Größe weniger Kubikzentimeter zu zerschneiden. Damit ist man von der Form der zu füllenden Gegenstände ebenso unabhängig wie bei den als Trägerstrukturen beschriebenen Wendeln, Faserpinseln oder "Flaschenputzern". Die verschiedenen Elementarfilter können dann zusammen mit heterofilen Fasern oder Fäden aus Schmelzkleber in die zu füllenden Hohlräume eingebracht werden. Das ganze läßt sich nach der Füllung verfestigen, so daß auch bei hoher mechanischer Beanspruchung kein Absetzen oder ein Abrieb wie bei Schüttfiltern zu befürchten ist.

Die beschriebenen Möglichkeiten von Trägerstrukturen für Adsorptionsfilter sind nicht als Einschränkung zu betrachten. Der Fachmann kann sich leicht ähnliche Trägerskelette ausdenken, die sich mit den bekannten Methoden der Metall- oder Kunststoffverarbeitung preisgünstig herstellen lassen oder sogar als Abfallprodukte anfallen. Die hoch luftdurchlässigen dreidimensionalen Trägergerüste sollen aufgrund der Dicke oder Festigkeit der Drähte, Monofilamente oder Fäden, aus denen sie aufgebaut sind, im wesentlichen formstabil sein, d.h. sie dürfen nicht einfach zusammenfallen, können aber durchaus elastisch sein, so daß sie sich in einem gewissen Maß zusammendrücken lassen, dann aber wieder in ihre ursprüngliche Form zurückkehren. Wenn daran die körnigen, insbesondere kugelförmigen Adsorberteilchen fixiert sind und diese Trägergerüste vorzugsweise vollständig mit den Aktivkohleteilchen gedeckt sind, erhöht sich die Steifigkeit und die Filterelemente bzw. die ganzen Aktivkohlefilterschichten sind dann verhältnismäßig starre, druckfeste Gebilde.

Je nach dem Material, aus dem das Trägergerüst aufgebaut ist, können die Adsorberteilchen daran direkt fixiert werden oder es bedarf dazu einer Haftmasse. Es sind Kunststoffmaterialien, insbesondere Fasermaterialien im Handel, die die Eigenschaft besitzen, bei einer erhöhten Temperatur in einem bestimmten Temperaturintervall zunächst oberflächlich klebrig zu werden, ohne zu Schmelzen. Diese Eigenschaft, die man als eingebauten Schmelzkleber bezeichnen könnte, kann ausgenutzt werden, um die Adsorberteilchen daran zu fixieren. Derartige Fasern können heterofile Fasern aus zwei koaxial angeordneten Komponenten sein, von denen die äußere einen niedrigeren Schmelzpunkt aufweist. Geeignet sind auch unverstreckte amorphe Polyesterfasern, die etwa bei 80 bis 85°C weich und klebrig werden, ohne zu Schmelzen, anschließend bei höheren Temperaturen auskristallisieren und dann die thermische Stabilität einer normalen Polyesterfaser haben. Derartige Fasern mit daran fixierten Adsorbentien sind für textile Flächenfilter beispielsweise in der DE-AS-32 00 959 beschrieben.

Eine andere, für die Zwecke der Erfindung bevorzugte, Möglichkeit besteht darin, daß die Adsorberteilchen mit einer Haftmasse an dem Trägergerüst fixiert werden. Damit hat der Fachmann mehr Auswahl bezüglich des Materials, aus dem das Trägerskelett aufgebaut ist, sowie hinsichtlich der Haftmasse.

Bei beiden Möglichkeiten wird der Durchmesser der Drähte, Monofilamente oder Stege des Trägergerüsts allein oder mit der Haftmasse so bemessen, daß eine vollständige Umhüllung der Trägerstruktur mit den Adsorberteilchen möglich ist, um in einer bevorzugten Ausführungsform der Erfindung ein vollständig mit den Adsorberteilchen bedecktes Trägergerüst, d.h. Filterelement zu erzeugen.

Ein erfindungsgemäßer Adsorptionsfilter kann auch auf folgende Weise hergestellt werden:
Man fixiert die Adsorberteilchen vorzugsweise kontinuierlich an den beschriebenen, beim Erwärmen oberflächlich klebrig werdenden Fasern oder Monofilamenten oder nach Überziehen mit einer Haftmasse an endlosen Drähten oder Monofilamenten und zerschneidet diese mit Adsorberkügelchen beladenen Träger dann in kleine Stücke von 0,5 bis 3 cm Länge. Diese Träger können statt gerade, auch sinus- oder zickzackförmig sein, um ein noch offeneres Gelege zu ergeben. Beim Zerschneiden oder später und gegebenenfalls zusammen mit heterofilen Fasern oder Fäden aus Schmelzkleber läßt sich ein Adsorptionsfilter der gewünschten Dicke als regelloses Gelege aus den mit Adsorberteilchen ummantelten Drähten oder Monofilamenten aufbauen und vorzugsweise in einer Form oder dem vorgesehen Behälter des Filters, gegebenenfalls durch Erwärmen, kompaktieren bzw. verschweißen.

Um die Adsorberteilchen am Träger zu fixieren, können sowohl anorganische als organische Haftsysteme eingesetzt werden. Zu letzteren gehören Polymere, insbesondere Acrylsäurederivate, Polyurethane, Polystyrole, Polyvinylacetate sowie Schmelzkleber. Bevorzugt werden Haftmassen, die aus vernetzbaren Polymeren bestehen, die vor ihrer Vernetzung ein Viskositätsminimum durchlaufen. Derartige Haftsysteme wie z.B. die IMPRANIL®-High-Solid-PUR-Reaktivprodukte von BAYER® sind zunächst hoch viskos. d.h. sie bieten eine gute Anfangshaftung, wenn das Trägerskelett mit den Adsorberteilchen bestreut wird. Mit der Temperaturerhöhung zeigen sie einen starken Viskositätsabfall, der eine bessere Benetzung der Adsorberteilchen und damit nach dem Aushärten durch Vernetzung eine besonders gute Haftung zur Folge hat. Während das Viskositätsminimum durchlaufen wird, bilden sich an den Kontaktstellen zwischen Trägergerüst und Adsorberteilchen infolge der Kapillarkräfte kleine Einschnürungen. Wegen der praktisch punktförmigen Fixierung der Adsorberkügelchen ist nach dem Aushärten fast deren gesamte Oberfläche dem zu reinigenden Gas zugänglich.

Bei metallischen oder keramischen Trägern kann man Haftmassen aus Emaille oder Glasuren verwenden, wobei wegen der zum Schmelzen dieser Überzüge benötigten hohen Temperaturen in inerter Atmosphäre gearbeitet werden muß, damit die Adsorberteilchen, insbesondere wenn sie aus Aktivkohle bestehen, nicht durch Rekristallisation oder Oxidation in ihrer Wirkung beeinträchtigt oder gar zerstört werden.

Die Adsorberteilchen müssen rieselfähig und abriebfest sein. Ihr Durchmesser ist zweckmäßigerweise drei- bis fünfmal kleiner als der Durchmesser der Poren oder Öffnungen des Trägerskeletts. Handelsübliche Adsorberkügelchen eines Durchmessers von 0,1 bis 1 mm sind nicht nur die rieselfähigste Form, sondern halten aufgrund ihrer Symmetrie auch höchste Belastungen aus. Körnige Adsorberteilchen sind aber auch noch geeignet, sofern sie nicht zu kantig oder in der Form zu unregelmäßig sind, weil es darauf ankommt, daß die Adsorberteilchen bei ihrer Fixierung am Trägergerüst auch noch in Strukturen von mehreren Zentimetern Dicke eindringen können.

Die Adsorberkörner können aus organischen oder anorganischen Ausgangsmaterialien bestehen und weisen Einlagerungsräume für Additive wie Schwermetallkatalysatoren, Flammhemmer, antibakterielle sowie fungizide Substanzen auf. Generell sollten sie möglichst druckfest sein.

Der Aufbau und die Herstellung geeigneter Adsorberkörner wenn auch nicht in der für die Zwecke dieser Erfindung geforderten Teilchengröße ist im einzelnen in der DE-B-28 04 154 beschrieben. Diese Adsorberkörner weisen eine verhältnismäßig geschlossene Außenoberfläche auf, sind jedoch insgesamt porös, so daß die zum Adsorbieren von Stoffen zur Verfügung stehende Fläche außerordentlich groß ist.

Als Material für die Adsorberkörner kann beispielsweise Kieselgur herangezogen werden, die bereits unter Umständen die erforderliche Kornform aufweisen kann. Um aber eine besonders gute Filterwirkung zu erreichen ist es besonders von Vorteil, daß die Adsorberkörner aus Aktivkohle gebildet sind.
Die Adsorber können Molekularsiebe oder auf Kieselsäurebasis aufgebaut sein, aus mit Chemikalien getränkten, hochporösen Materialien bestehen oder Substanzen mit katalytischen Effekten, wie z.B. Metallverbinden, tragen.
Geeignete Aktivkohleteilchen sollen eine innere Oberfläche von 600 bis 2000 m²/g, vorzugsweise 1000 bis 1600 m²/g bestimmt nach der BET-Methode haben. Die Aktivkohleteilchen sollten sehr druckfest sein und sie sind vorzugsweise gegenüber Feuchtigkeit hochgradig unempfindlich. Eine sehr abriebfeste kugelförmige Aktivkohle läßt sich beispielsweise aus Steinkohlenteerpech- oder Petroleumdestillationsrückständen herstellen. Durch eine besondere Nachbehandlung ist eine zusätzliche Härtung der Oberfläche sowie eine bemerkenswerte Unempfindlichkeit gegenüber Feuchtigkeit zu erreichen. Die Herstellung geeigneter Aktivkohlekügelchen ist beispielsweise in EP-B-118 618, DE-B-29 32 571 und DE-A-30 41 115 beschrieben.

Um die Abriebfestigkeit zu erhöhen, kann die Aktivkohle an ihrer Oberfläche auch in einer Kunststoffdispersion oder einer Steinkohlenteerpechlösung bzw. Bitumenlösung imprägniert und einer leichten Nachaktivierung unterworfen werden. Die Empfindlichkeit gegenüber Wasserdampf läßt sich durch Zugabe von Ammoniakgas während der Nachaktivierung und Abkühlung auf 100°C unter Luftausschluß wesentlich herabsetzen.

Die Aktivkohleteilchen können mit Metallverbindungen, insbesondere der Metalle Silber, Kupfer und Chrom imprägniert sein. Daneben können inkapsulierte Enzyme vorliegen, die Gifte abbauen, wie das in der EP-B-118 618 beschrieben ist.

Mit den beschriebenen Filtern wurden ausgezeichnete Abscheidungseffekte von Schadstoffen und Gasen bei extrem niedrigen Druckverlusten erzielt. Es hat sich nämlich überraschenderweise gezeigt, daß die Adsorberkörner für eine hohe Wirksamkeit bei geringem Druckverlust nicht durchströmt, sondern nur angeströmt zu werden brauchen. Die Brown'sche Bewegung der Gasmoleküle genügt, um eine hohe Adsorptionsgeschwindigkeit zu erzielen. Der Druckverlust eines erfindungsgemäßen Adsorptionsfilters beträgt bei einer Dicke von 4 cm und kreisförmigem Querschnitt von 100 m² bei Durchströmen mit einem Luftstrom von einem Liter pro Sekunde weniger als 0.098 kPa (10 mm), vorzugsweise weniger als 0.049 kPa (5), insbesondere weniger als 0.0196 kPa (2 mm Wassersäule). Eine aufgelockerte Adsorptionsfilterschicht gemäß der Erfindung hat ein größeres Volumen als ein Schüttfilter bei gleicher Leistung, aber erheblich geringerem Strömungswiderstand.

### Beispiel 1

Zehn Drahtgitter, 50 x 60 cm groß, Maschenweite 2 mm, Drahtstärke 0,30 mm, wurden unter Verwendung von 2 mm starken Stahlrörchen als Abstandshalter zu einem ca. 4 cm hohen Paket zusammengefügt und in eine Mischung, bestehend aus einem "maskierten" präpolymeren Polyurethan (Bayer HS® 62), eines Emulgators (Bayer HS® DW), eines Vernetzers (Bayer HS® C) und Wasser getaucht. Die Viskosität (ca. 2000 mP.s) war so eingestellt, daß das überschüssige Haftmittel leicht abgeschüttelt werden konnte und das dreidimensionale Gerüst mit 440 g Haftmittel überzogen war. Dieses wurde in eine große Schale gelegt und mit einem Molekularsieb in Kugelform (Durchmesser 0,4 - 0,6 mm) bestreut. Dabei blieben ca. 3 kg Adsorber im Gerüst hängen. Durch Temperaturerhöhung auf 170°C wurde die Haftschicht vernetzt. Die Molekularsiebkügelchen wurden sehr fest, aber nur punktförmig, auf dem Trägerskelett fixiert. Um die Luftdurchlässigkeit zu messen, wurde eine seitlich abgedichtete Fläche von ca. 100 cm² einem Luftstrom von 1 l/sec. unterworfen. Der Druckverlust betrug weniger als 0.0196 kPa (2 mm Wassersäule).

### Beispiel 2

Als Trägerskelett wurde ein 4 cm dicker, großporiger, retikulierter Polyurethanschaum mit einem Litergewicht von 30 g und einem Porendurchmesser von 2,5 - 3 mm verwendet. Dieser Schaum wurde mit der gleichen Haftmasse wie in Beispiel 1 abgequetscht (Kleberauftrag, trocken 55 g/l), mit Molekularsiebkügelchen wie in Beispiel 1 beladen (ca. 260 g/l) und schließlich kurzzeitig auf 170°C erhitzt. Es resultierte ein Filtermaterial mit sehr geringem Druckverlust (bei 1 l/sec. auf 100 cm², etwa 0.0098 kPa 1 mm Wassersäule). Die adsorptiven Eigenschaften entsprachen etwa denen des Beispiels 1.

## Patentansprüche

1. Adsorptionsfilter mit hoher Luftdurchlässigkeit enthaltend ein im wesentlichen formstabiles, dreidimensionales Trägergerüst aus Drähten, Monofilamenten oder Stegen eines Durchmessers von 0,1 bis 1 mm, die mit einer Schicht von körnigen, abriebfesten Adsorberteilchen eines Durchmessers von 0,1 bis 2 mm umhüllt sind, wobei der Abstand der Drähte, Monofilamente oder Stege voneinander wenigstens doppelt so groß ist, wie der Durchmesser der Adsorberteilchen.

2. Adsorptionsfilter nach Anspruch 1, dadurch gekennzeichnet, daß die Adsorberteilchen kugelförmig sind.

3. Adsorptionsfilter nach Anspruch 1 oder 2, dadurch gekennzeichnet, daß der Abstand der Drähte, Stege oder Monofilamente voneinander das drei- bis zehnfache des Durchmessers der Adsorberteilchen beträgt.

4. Adsorptionsfilter nach einem der Ansprüche 1 bis 3, dadurch gekennzeichnet, daß das Trägergerüst aus Kunststoff besteht.

5. Adsorptionsfilter nach Anspruch 4, dadurch gekennzeichnet, daß das Trägergerüst ein großporiger retikulierter PUR-Schaum ist.

6. Adsorptionsfilter nach Anspruch 5, dadurch gekennzeichnet, daß der großporige retikulierte PUR-Schaum ein Litergewicht von 20 bis 60 g und Poren von 1,5 bis 3 mm Durchmesser hat.

7. Adsorptionsfilter nach einem der Ansprüche 1 bis 3, dadurch gekennzeichnet, daß das Trägergerüst aus übereinander angeordneten Drahtgeflechten oder Drahtgittern aufgebaut ist.

8. Adsorptionsfilter nach einem der Ansprüche 1 bis 3, dadurch gekennzeichnet, daß das Trägergerüst aus Kunststoff- oder Drahtwendeln der gleichen bis 10-fachen Länge ihres Durchmessers aufgebaut ist.

9. Adsorptionsfilter nach einem der Ansprüche 1 bis 3, dadurch gekennzeichnet, daß die Trägerstruktur aus Drähten oder Monofilamenten von 2 bis 10 mm Länge, die von zusammengedrehten Metall- oder Kunststoffdrähten gehalten werden und senkrecht zu dieser Achse wendeltreppenartig abstehen, aufgebaut ist.

10. Adsorptionsfilter nach einem der Ansprüche 1 bis 3, dadurch gekennzeichnet, daß die Trägerstruktur aus strahlenförmig von einem Mittelpunkt ausgehenden Faserpinseln von 2 bis 10 mm Länge aufgebaut ist.

11. Adsorptionsfilter nach Anspruch 1 bis 10, dadurch gekennzeichnet, daß die Trägerstrukturen durch heterofile Fasern oder Fäden aus Schmelzkleber miteinander verbunden, z.B. verschweißt sind.

12. Adsorptionsfilter nach einem der Ansprüche 1 bis 11, dadurch gekennzeichnet, daß das Trägergerüst vollständig mit den Adsorberteilchen bedeckt ist.

13. Adsorptionsfilter nach einem der Ansprüche 1 bis 12, dadurch gekennzeichnet, daß die Adsorberteilchen mit einer Haftmasse an dem Trägergerüst fixiert sind.

14. Adsorptionsfilter nach Anspruch 13, dadurch gekennzeichnet, daß die Haftmasse aus Polymeren, insbesondere Acrylsäurederivaten, Polyurethanen, Polystyrolen, Polyvinylacetaten oder Schmelzklebern besteht.

15. Adsorptionsfilter nach Anspruch 13, dadurch gekennzeichnet, daß die Haftmasse aus vernetzbaren Polymeren besteht, welche vor ihrer Vernetzung ein Viskositätsminimum durchlaufen.

16. Adsorptionsfilter nach Anspruch 13, dadurch gekennzeichnet, daß die Haftmasse aus schmelzbaren anorganischen Gemischen, insbesondere Gläsern, Glasuren oder Emails besteht.

17. Adsorptionsfilter nach einem der Ansprüche 1 bis 16, dadurch gekennzeichnet, daß die Adsorberpartikel 0,2 bis 1 mm groß sind.

18. Adsorptionsfilter nach einem der Ansprüche 1 bis 17, dadurch gekennzeichnet, daß die Adsorberpartikel in einer Menge von 50 bis 500 g/l, vorzugsweise 100 bis 300 g/l des Filtermaterials vorhanden sind.

19. Adsorptionsfilter nach einem der Ansprüche 1 bis 18, dadurch gekennzeichnet, daß die Adsorberpartikel aus Aktivkohle bestehen.

20. Adsorptionsfilter nach einem der Ansprüche 1 bis 19, dadurch gekennzeichnet, daß die Aktivkohleteilchen eine innere Oberfläche von 600 bis 2.000 m²/g, vorzugsweise 1.000 bis 1.600 m²/g haben.

21. Adsorptionsfilter nach einem der Ansprüche 1 bis 20, dadurch gekennzeichnet, daß die Adsorberteilchen sehr druckfest sind.

22. Adsorptionsfilter nach einem der Ansprüche 1 bis 21, dadurch gekennzeichnet, daß die Adsorberteilchen mit Metallverbindungen imprägniert sind.

23. Adsorptionsfilter nach einem der Ansprüche 1 bis 22, dadurch gekennzeichnet, daß die Adsorberteilchen inkapsulierte Enzyme enthalten.

24. Adsorptionsfilter nach einem der Ansprüche 1 bis 23, dadurch gekennzeichnet, daß ihr Druckverlust bei einer Dicke von 4 cm und kreisförmigem Querschnitt von 100 cm² bei Durchströmen mit einem Luftstrom von einem Liter pro Sekunde Weniger als 0.098 kPa (10 mm), vorzugsweise weniger als 0.0196 kPa (2 mm Wassersäule) beträgt.

## Claims

1. Adsorption filter with high air-permeability comprising a substantially three-dimensional support frame which is stable in form and made of wires, monofilaments or webs of a diameter of from 0.1 mm to 1 mm, which are covered by a layer of granular abrasion-resistant adsorption particles having a diameter of from 0.1 mm to 2 mm, the distance of separation of the wires, monofilaments or webs being at least double the diameter of the adsorption particles.

2. Adsorption filter according to claim 1, characterized in that the adsorption particles are spherical.

3. Adsorption filter according to either of claims 1 or 2, characterized in that the distance of separation of the wires, webs or monofilaments from each other is from three to ten times the diameter of the adsorption particles.

4. Adsorption filter according to any of claims 1 to 3, characterized in that the support frame is made of synthetic material.

5. Adsorption filter according to claim 4, characterized in that the support frame is reticulate, pure foam with large pores.

6. Adsorption filter according to claim 5, characterized in that the reticulate pure foam with large pores has a weight per litre of from 20 to 60 g and the pores have a diameter of from 1.5 to 3 mm.

7. Adsorption filter according to any of claims 1 to 3, characterized in that the support frame is built up of wire netting or wire grates disposed over each other.

8. Adsorption filter according to any of claims 1 to 3, characterized in that the support frame which is made of synthetic material or wire turns of from the same to ten times the length of their diameters.

9. Adsorption filter according to any of claims 1 to 3, characterized in that the support structure is constructed of wires or monofilaments of from 2 to 10 mm in length which are held by metal or synthetic wires twisted together and which stand away perpendicular to this axis in the fashion of a winding staircase.

10. Adsorption filter according to any of claims 1 to 3, characterized in that the support structure is constructed of radial brush strands originating from a middle point and which are from 2 to 10 mm in length.

11. Adsorption filter according to any of claims 1 to 10, characterized in that the support structures are connected, for example welded, by means of heterophile filaments or strands made from fusion adhesive.

12. Adsorption filter according to any of claims 1 to 11, characterized in that the support frame is completely covered with the adsorption particles.

13. Adsorption filter according to any of claims 1 to 12, characterized in that the adsorption particles are fixed to the support frame with an adhesive mass.

14. Adsorption filter according to claim 13, characterized in that the adhesive mass is made of polymers, in particular derivatives of acrylic acid, polyurethanes, polystyrenes, polyvinyl acetates or fusion adhesives.

15. Adsorption filter according to claim 13, characterized in that the adhesive mass is made of polymers that can be cross-linked and which pass through a minimum viscosity before they are cross-linked.

16. Adsorption filter according to claim 13, characterized in that the adhesive mass is made of fusible inorganic mixtures, in particular glasses, glazes or enamels.

17. Adsorption filter according to any of claims 1 to 16, characterized in that the adsorption particles are 0.2 to 1 mm in size.

18. Adsorption filter according to any of claims 1 to 17, characterized in that the adsorption particles are present in a quantity of from 50 to 500 g/l, with preferably 100 to 300 g/l of the filtering material.

19. Adsorption filter according to any of claims 1 to 18, characterized in that the adsorption particles consist of activated carbon.

20. Adsorption filter according to any of claims 1 to 19, characterized in that the activated carbon particles have an internal surface area of from 600 to 2,000 m²/g, preferably 1,000 to 1,600 m²/g.

21. Adsorption filter according to any of claims 1 to 20, characterized in that the adsorption particles are very resistant to pressure.

22. Adsorption filter according to any of claims 1 to 21, characterized in that the adsorption particles are impregnated with metallic compounds.

23. Adsorption filter according to any of claims 1 to 22, characterized in that the adsorption particles contain encapsulated enzymes.

24. Adsorption filter according to any of claims 1 to 23, characterized in that their loss of pressure in the case of a thickness of 4 cm and a circular cross-sectional area of 100 cm² when having an air current passed over them at the rate of a litre per second is less than 0.098 kPa (10 mm), preferably less than 0.0196 kPa (2 mm column of water).

## Revendications

1. Filtre adsorbant, présentant une perméabilité élevée à l'air, comportant une ossature support tridimensionnelle, sensiblement indéformable, à base de fils métalliques, de monofilaments ou de traverses d'un diamètre de 0,1 à 1 mm, qui sont enrobés par une couche de particules adsorbantes, résistantes à l'abrasion, en grains, d'un diamètre de 0,1 à 2 mm, la distance entre eux des fils métalliques, monofilaments ou traverses étant au moins deux fois aussi grande que le diamètre des particules adsorbantes.

2. Filtre adsorbant selon la revendication 1, caractérisé par le fait que les particules adsorbantes sont sphériques.

3. Filtre adsorbant selon l'une des revendications 1 ou 2, caractérisé par le fait que la distance entre eux des fils métalliques, traverses ou monofilaments s'élève à une valeur du triple au décuple du diamètre des particules adsorbantes.

4. Filtre adsorbant selon l'une des revendications 1 à 3, caractérisé par le fait que l'ossature support est en matière plastique.

5. Filtre adsorbant selon la revendication 4, caractérisé par le fait que l'ossature support est une mousse de polyuréthanne, réticulée, à pores de grande dimension.

6. Filtre adsorbant selon la revendication 5, caractérisé par le fait que la mousse de polyuréthanne réticulée, à pores de grande dimension, a un poids au litre de 20 à 60 g et des pores de 1,5 à 3 mm de diamètre.

7. Filtre adsorbant selon l'une des revendications 1 à 3, caractérisé par le fait que l'ossature support est constituée de treillis en fil métallique ou grilles en fil métallique, disposés les uns sur les autres.

8. Filtre adsorbant selon l'une des revendications 1 à 3, caractérisé par le fait que l'ossature support est constituée d'hélices en matière plastique ou en fil métallique d'une longueur allant de la même longueur que leur diamètre à une longueur de 10 fois leur diamètre.

9. Filtre adsorbant selon l'une des revendications 1 à 3, caractérisé par le fait que la structure support est constituée de fils métalliques ou de monofilaments de 2 à 10 mm de longueur, qui sont maintenus par des fils métalliques ou de matière plastique torsadés et s'écartent perpendiculairement à cet axe à la manière d'un escalier en colimaçon.

10. Filtre adsorbant selon l'une des revendications 1 à 3, caractérisé par le fait que la structure support est constituée de pinceaux de fibres d'une longueur de 2 à 10 mm, rayonnant à partir d'un point central.

11. Filtre adsorbant selon l'une des revendications 1 à 10, caractérisé par le fait que les structures supports sont liées entre elles, par exemple soudées, par des fibres ou fils hétérofilaments de colle thermofusible.

12. Filtre adsorbant selon l'une des revendications 1 à 11, caractérisé par le fait que l'ossature support est entièrement recouverte par les particules adsorbantes.

13. Filtre adsorbant selon l'une des revendications 1 à 12, caractérisé par le fait que les particules adsorbantes sont fixées à l'ossature support par une substance adhésive.

14. Filtre adsorbant selon la revendication 13, caractérisé par le fait que la substance adhésive se compose de polymères, en particulier de dérivés de l'acide acrylique, de polyuréthannes, de polystyrènes, de poly(acétates de vinyle) ou de colles thermofusibles.

15. Filtre adsorbant selon la revendication 13, caractérisé par le fait que la substance adhésive se compose de polymères réticulables, lesquels passent par un minimum de viscosité avant leur réticulation.

16. Filtre adsorbant selon la revendication 13, caractérisé par le fait que la substance adhésive se compose de mélanges minéraux fusibles, en particulier de verres, de glaçures ou d'émaux.

17. Filtre adsorbant selon l'une des revendications 1 à 16, caractérisé par le fait que les particules adsorbantes ont une dimension de 0,2 à 1 mm.

18. Filtre adsorbant selon l'une des revendications 1 à 17, caractérisé par le fait que les particules adsorbantes sont présentes dans une quantité de à 50 à 500 g/l, de préférence de 100 à 300 g/l du matériau filtrant.

19. Filtre adsorbant selon l'une des revendications 1 à 18, caractérisé par le fait que les particules adsorbantes se composent de charbon actif.

20. Filtre adsorbant selon l'une des revendications 1 à 19, caractérisé par le fait que les particules de charbon actif présentent une surface interne de 600 à 2000 m²/g, de préférence de 1000 à 1600 m²/g.

21. Filtre adsorbant selon l'une des revendications 1 à 20, caractérisé par le fait que les particules adsorbantes sont très résistantes à la pression.

22. Filtre adsorbant selon l'une des revendications 1 à 21, caractérisé par le fait que les particules adsorbantes sont imprégnées par des composés métalliques.

23. Filtre adsorbant selon l'une des revendications 1 à 22, caractérisé par le fait que les particules adsorbantes contiennent des enzymes encapsulées.

24. Filtre adsorbant selon l'une des revendications 1 à 23, caractérisé par le fait que sa perte de charge pour une épaisseur de 4 cm et une section circulaire de 100 cm², en étant traversé par un courant d'air d'un litre par seconde, s'élève à une valeur inférieure à 0,098 kPa (10 mm), de préférence inférieure à 0,0196 kPa (2 mm de colonne d'eau).
